# EUROPEAN PATENT APPLICATION

(11) **EP 0 919 169 A1**
(43) Date of publication of application: **02.06.1999**
(21) Application number: 98305922.1
(22) Date of filing: 24.07.1998
(51) Int. Cl.: A47J 27/086, A47J 27/62

(54) **Pressure adjustable electric pressure cooker**

(30) Priority: 27.11.1997 CN 97114306
(71) Applicant: Guangdong Rongsheng Electric Holding Co., Ltd., Shunde City, Guangdong 528303 (CN)
(72) Inventor: HUANG, Quanzhang, Shunde City, Guangdong 528303 (CN); WANG, Chaogui, Shunde City, Guangdong 528303 (CN); HUANG, Yuncheng, Shunde City, Guangdong 528303 (CN); LUO, Weiye, Shunde City, Guangdong 528303 (CN)
(74) Representative: Jennings, Nigel Robin

(57) **Abstract**

A pressure-adjustable electric pressure cooker includes an outer housing (2), an inner pot (4), an outer pot (3) and a plurality of spiral supporting springs (7) uniformly disposed between them producing a resilient connection between them. An adjustable displacement switch (9,10,11) is disposed between the outer housing (2) and the outer pot (3) and arranged to ensure instantaneous switching off.

## Description

### Field of the invention

The invention relates to an electric pressure cooker, in particular to a pressure adjustable electric pressure cooker.

### Background of the invention

Electric pressure cooker of pressure-controlled type has a very broad prospect in the market, since its pressure can be controlled, it is highly automated, the vapor within which does not leak out during cooking, so that the effect of energy-saving is remarkable. Furthermore, by cooking with it, the cooking time can be shortened, and the preservation ratio of nutrient in food is far more higher than that of the food cooked with common electric cooker.

As to the prior electric pressure cooker of pressure-controlled type, between the inner pot and the outer pot there is provided a corrugated plate made of resilient pressure-sensitive material, by which the pressure within the inner pot is transmitted out, though further conversion and transmission, the pressure signal at least is used to control the switch of a circuit, thereby realizing the full-automation of pressure control. For example, Chinese Patent 93216338.6 has disclosed a pressure-controlled, fully-automatic electric pressure cooker using such a structure. That pressure cooker, however, as its bottom of outer pot has to be designed into a corrugated plate with annular grooves and has to be made in such a shape which is difficult produced and the cost is high. In addition, the magnitude of resiliance of corrugated plated is hard to be exactly controlled. To solve this problem, the pressure cooker has been redesigned such that between the outer pot and the heating disk there is provided a combination of disk springs which transmits the signal representing the pressure within the inner pot. Yet the drawbacks of difficult processing and higher cost still remain. Besides, the automatic control system of the prior pressure-controlled electric pressure cooker has a rather complex structure, the path to transmit the signal is rather long, and the electric circuit is cut off through a gradually changing process, its reliability is not high, the precision of pressure control cannot be guaranteed. Therefore, all these prior pressure-controlled electric pressure cookers can hardly be entered in common families and be received by general consumers.

### Summary of the invention

The object of the invention is to provide a pressure-adjustable electric pressure cooker which is simple in structure, easy to be manufactured with lower cost, and higher in both the reliability and the precision of pressure control.

The pressure-adjustable electric pressure cooker according to the invention includes a pot cover, an outer housing, an outer pot, an inner pot, a heating disk, and a lock mechanism for the pot cover. There provides a seal ring between the pot cover and the inner pot, a plurality of identical spiral supporting springs which are uniformly distributed between the heating disk and the outer pot, and a transmission rod between the outer pot and the outer housing, one end of which is connected with a reset button; while on the other end, a push tab and a transmission member are fixed. Just above the transmission member, a drive rod is provided, the upper end of which is fixed at the bottom of heating disk, with a switch spring surrounding the drive rod and the transmission member. The middle part of transmission is articulated by a pivot means which is fixed at the bottom face of outer pot. Within the outer housing at the outside and bottom side of the outer pot is disposed a attaching member on which an adjustable slider plate is slidably mounted, the upper end of which is connected with an adjustable button via a cam. At the lower end of the adjustable slider plate is fixed a magnet, which is located below the end at the reset button side of the transmission rod.

According to the invention, there is a resilient connection between the inner pot and the outer pot which is composed by a plurality of identical special supporting springs disposed between the heating disk and the outer pot, so that the signal of pressure within the inner pot can be more sensitively converted into displacement signal and transmitted out through the drive rod disposed at the bottom of heating disk. At the same time, the displacement control system compresses the switch spring in response of the displacement of drive rod. At lest the spring delivers its energy, pushes the transmission rod to rotate around the articulated point, and allowed the push tab to push the contact switch, thus achieving the object to realize a fully automatic pressure-controlled electric circuit. The invention has the features of very simple structure, easy to be manufactured at a lower cost, and a higher reliability and precision in pressure control, so that the pressure cooker is suitable to be used in common families.

### Brief description of the invention

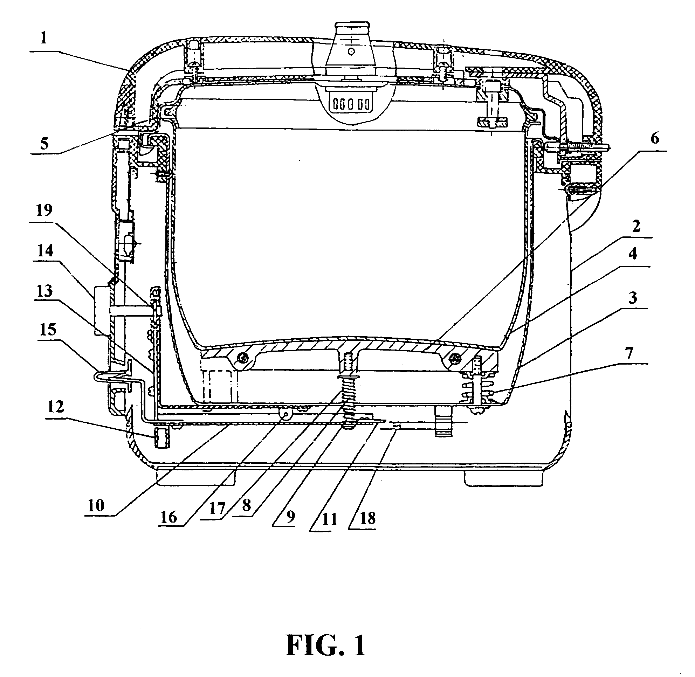

Fig. 1 is a schematic view of the structure according to the invention.

### Detailed description of the invention

The invention will be described below in detail with reference to the appended drawing.

As shown in the figure, the pressure cooker according to the invention includes a pot cover 1, an outer housing 2, an outer pot 3, an inner pot 4, a heating disk 6, and a lock mechanism for the pot cover. The said pot cover 1 is used to cover all the pot body. There provides a seal ring 5 between the pot cover 1 and the inner pot 4 such that when the pot cover 1 is put in place, the inner pot 4 will be sealed completely, the vapor within it should not leak out. The heating disk 6 is disposed beneath the inner pot 4 in close contact with the inner pot 4. A plurality of spiral supporting springs 7 are disposed between the heating 6 and the outer pot 3, and uniformly distributed such that the heating disk 6 and the inner pot 3 are supported resiliently. Between the outer housing 2 and the outer pot 3 is disposed a switch for controlling displacement, the main part of which is a transmission rod 10, with one end securely connected to a reset button, while on the other end of which a push tab 11 and a transmission member 9 are fixed. Push tab 11 is made of insulating material, while the transmission member 9 may be constituted by a bolt. Just above the bolt there is a drive rod 8, the upper end of which is fixed at the bottom of heating disk 6, with a switch spring 17 surrounding the drive rod 8 and the transmission member 9, wherein the drive rod 8 can move in response to the vertical movement of the inner pot 4 and the heating disk 9. The middle part of transmission rod 10 is articulated by a pivot means 16 which is fixed at the bottom face of outer pot 3, so that the transmission rod 10 can rotate around the pivot means 16 and bring the push tab 11 into vertical movement. Within the outer housing 2 at the outside and bottom side of the outer pot 3 is disposed a attaching member on which slidably mounted a vertically adjustable slider plate 13. At the upper end of the slider plate 13, there is a circular hole, and a cam 19, which is fixed to an adjustable button 14, is inserted in this hole.

At the lower end of the adjustable slider plate 13 is fixed a magnet 12, which is located below the end at the reset button 15 side of the transmission rod 10. By turning the adjustable button 4, the cam 19 can be rotated, and the adjustable slider plate 13 can be brought into vertical movement, thus the position of the magnet 12 along the vertical direction can be changed.

On use of the invention, first put the food to be cooked into the inner pot 4, then put the inner pot 4 into the outer pot 3, put the seal ring on the upper peripheral edge of the inner pot 4, put on the pot cover 1, and lock it with a lock machination such that the inner pot 4 is sealed completely. Switch on, and push down the reset button 15, wherein the magnet 12 attracts with one end of transmission rod 10 and attaches thereto, the push tab 11 is separated from the control switch 18, resulting in it closed, the electric circuit keeps conducting, and the heating disk 6 heats the inner pot 4. As the inner pot 4 is heated by the heating disk 6, the pressure within the inner pot 4 gradually increases. As the pot cover 1 and the pot body are in rigid connection, the inner pot 4 cannot displace upward but pushes against the heating disk 6 downward. Consequently, the spiral supporting springs 7 between the heating disk 6 and the outer pot 3 are compressed gradually. The heating disk 6 with the drive rod 8 displace downward, and the switch spring 17 is compressed. As the pressure within the inner pot continues to increase, the drive rod 8 continues to displace downward, pushing against the transmission member 9. When this pushing force reaches a certain value, the other end of the transmission rod 10 can get rid of attachment from the magnet 12, the magnetic effect of the magnet 12 on the transmission rod 10 quickly decreases. Meanwhile the patential resilient energy of the switch spring is released, quickly pushing against the transmission rod 9, then the transmission rod 10 quickly rotates around the pivot means, brings the push tab 11 on its one end to more downward quickly, thereby switches off the contact switch 18, causing the electric circuit cease to further heat and pressurize the inner pot 4, thus achieving the object to completely realize an electric circuit that can automatically control the pressure in accordance with the pressure signal from the inner pot 4. Since the inner pot 4 is completely sealed, the vapor within the inner pot does not leak out during cooking, the time period required to cook food can be greatly shortened, not only the nutrient perservation rate of the food is enhanced, but also a dominant effect of energy saving can be attained. Furthermore, since the electric circuit can be switched off instantaneously only when one end of the transmission rod 10 has got rid of attachment from the magnet 12 and the transmission rod 10 totates suddenly under the push action of the compressed switch spring, therefore, this instantaneous cut off of the electric circuit has both high reliability and high precision for pressure control. When it is required to change the maximum pressure within the inner pot 4 for cooking a different kind of food, it can be done simply by turning the adjustable button 14, whereby the cam 19 be rotated, and the adjustable slider plate 13 can be brought into vertical movement, thus the position of the magnet 12 along the vertical direction can be changed. For example, when it is required to enhance the maximum pressure within the inner pot 4, the magnet 12 may be displaced upward, thus increasing the distance between the drive rod 8 and the transmission member 9. Consequently, in order to search the condition that one end of the transmission rod 10 is rid of attachment from the magnet 12 and the contact switch is switched off,the drive rod 8 has to move downward a more larger displacement, that means the pressure with the inner pot 4 has to increase to a more higher value, then the electric circuit can be cut off.

To improve the sealing property of the inner pot 4 of the invention and to ensure the safety on use, the cross-section of the seal ring 5 is made as a shape like "<". Thus, the inner pot 4 is initially sealed by the pre-clamping force of the seal ring 5, then, as the temperature and pressure within the inner pot 4 increases, the seal ring 5 can more tightly block between the inner pot 4 and the pot cover to make a seal. In the case that when the predetermined working pressure has reached but the electric circuit for heating is not cut off, the inner pot 4 still moves downward exceeding the normal value, the sealing condition of the seal ring 5 can be destroyed, allowing the vapor automatically exit from the periphery to drop the pressure, thus ensuring the safety during the use of the invention.

## Claims

1. A pressure-adjustable electric pressure cooker including a pot cover (1), an outer housing (2), an outer pot (3), an inner pot (4), a heating disk (6), and a lock mechanism for the pot cover, there provides a seat ring (5) between the pot cover (1) and the inner pot (4), characterized in that:
A: there are a plurality of identical spiral supporting springs (7) uniformly distributed between the heating disk (6) and the outer pot (3);
B: There is a transmission rod (10) between the outer pot (3) and the outer housing (2), one end of the transmission rod is connected with a reset button (15), while on the other end, a push tab (11) and a transmission member (9) are fixed, just above the transmission member (9), a drive rod (8) is provided, the upper end of which is fixed at the button of heating disk (6), with a switch spring (17) surrounding the drive rod (8) and the transmission member (9), the middle part of transmission rod (10) is articulated by a pivot means which is fixed at the button face of outer pot (3), within the outer housing (2) at the outside and button side of the outer pot (3) is disposed a attaching member on which an adjustable slider plate (13) is slidably mounted, the upper end of which is connected with an adjustable button (14) via a com (19), at the lower end of the adjustable slider plate (13) is fixed a magnet (12) which is located below the end at the reset button (15) side of the transmission rod (10).

2. A pressure-adjustable electric pressure cooker according to claim 1, characterized in that the cross section of its seal ring (5) is made as a shape like "<".
